# EUROPEAN PATENT APPLICATION

(11) **EP 1 923 855 A1**
(43) Date of publication of application: **21.05.2008**
(21) Application number: 07119688.5
(22) Date of filing: 31.10.2007
(51) Int. Cl.: G09G 3/28

(54) **Plasma display panel with improved power source unit**

(30) Priority: 17.11.2006 KR 20060113905
(71) Applicant: Samsung SDI Co., Ltd., Suwon-si Gyeonggi-do (KR)
(72) Inventor: Son, Jin-boo Legal & IP Team, Samsung SDI Co., LTD.,, Suwon-si, Gyeonggi-do (KR)
(74) Representative: Hengelhaupt, Jürgen

(57) **Abstract**

A plasma display panel (PDP) is provided having a display panel, scan electrodes and sustain electrodes parallel to each other on the display panel, and address electrodes on the display panel crossing the scan electrodes and the sustain electrodes. In addition, the PDP includes a sustain driver for driving the sustain electrodes. The sustain driver has sustain driver transistors. Furthermore, the PDP includes a power source unit for supplying gate turn-on voltage to the sustain driver transistors. The power source unit includes a transformer having a transformer primary part and a transformer secondary part. The transformer primary part is connected to a transformer primary part voltage source. The transformer secondary part is adapted to generate the gate turn-on voltage.

## Description

### BACKGROUND

### 1. Field of the Invention

The present invention relates to a plasma display panel, and more particularly, to a plasma display panel with an improved power source unit.

### 2. Discussion of Related Art

On the upper part of a plasma display panel (PDP), scan electrodes and sustain electrodes are formed, and on a lower part of a PDP, address electrodes are formed in a direction orthogonal to the scan electrodes and the sustain electrodes.

One frame of such a PDP is divided and driven into a plurality of subfields with predetermined weighting values. Each subfield is configured of a reset period, an address period, and a sustain period.

Ramp pulses are supplied to the scan electrodes during the reset period so that the subsequent address discharge is stably performed, thereby forming predetermined wall charges. During the address period, scan pulses are sequentially supplied to the scan electrodes and data pulses are supplied to the address electrodes. As a result, an address discharge is generated from discharge cells supplied with the data pulses, forming the predetermined wall charges.

Sustain pulses are alternatively supplied to the scan electrodes and the sustain electrodes during the sustain period so that a sustain discharge is generated from cells selected by the address discharge. Images with a predetermined brightness are displayed on the panel corresponding to the number of times the sustain discharge is generated.

Such a conventional plasma display device includes a driver that supplies driving waveforms to the scan electrodes, the sustain electrodes, and the address electrodes. Further, the driver for driving the scan electrodes and the sustain electrodes includes an energy recovery circuit. The energy recovery circuit lowers power consumption by recovering voltage supplied for the sustain discharge and re-supplying the recovered voltage.

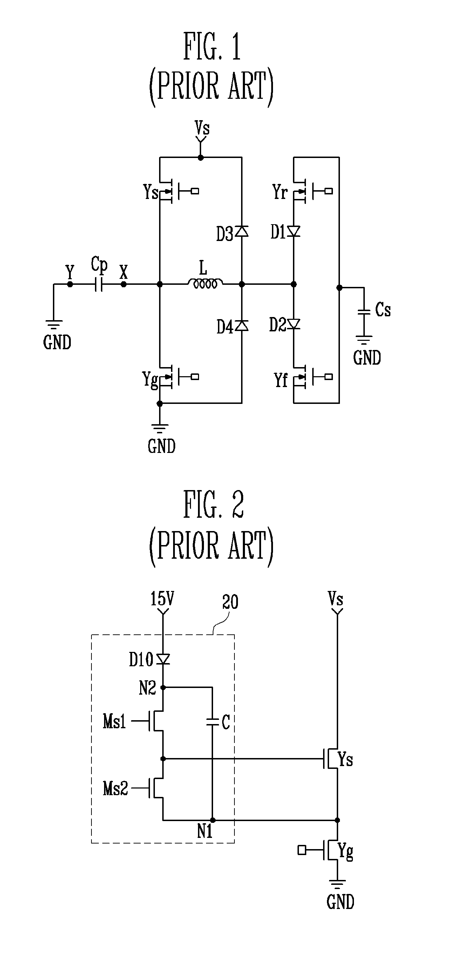

FIG. 1 is a circuit diagram of a general energy recovery circuit. In FIG. 1, a panel capacitor Cp equivalently represents capacitive components formed by scan electrodes Y and sustain electrodes X. Although, FIG. 1 shows the scan electrodes Y connected to a ground power source GND for convenience of explanation, in practice the scan electrodes Y are connected to a scan driver.

Referring to FIG. 1, the energy recovery circuit is charged by recovering the energy of the panel capacitor Cp. The energy recovery circuit re-supplies the charged energy to the panel capacitor Cp. As depicted in Fig. 1, the energy recovery circuit includes transistors Yr, Yf, Ys, and Yg; diodes D1, D2, D3, and D4; and an inductor L.

A source capacitor Cs charges voltage by recovering the energy from the panel capacitor Cp during the sustain period. The energy recovery circuit re-supplies the charged voltage to the panel capacitor Cp. The source capacitor Cs has a capacity capable of charging voltage corresponding to a half of sustain voltage Vs.

The inductor L is located between the source capacitor Cs and the panel capacitor Cp. The inductor L and the panel capacitor Cp form a resonant circuit. Accordingly, the voltage supplied from the source capacitor Cs to the panel capacitor Cp rises approximately up to the sustain voltage Vs.

The first transistor Yr is located between the inductor and the source capacitor Cs. The first transistor Yr is turned on when the voltage is supplied from the source capacitor Cs to the panel capacitor Cp.

The second transistor Yf is located between the inductor L and the source capacitor Cs. The second transistor Yf is turned on when the voltage is recovered from the panel capacitor Cp to the source capacitor Cs.

The third transistor Ys is located between the sustain voltage source Vs and the panel capacitor Cp. The third transistor Ys is turned on after the voltage is primarily supplied from the source capacitor Cs to the panel capacitor Cp. As a result, the sustain voltage Vs is supplied to the panel capacitor Cp, stably generating the sustain discharge.

The fourth transistor Yg is located between the ground power source GND and the panel capacitor Cp. The fourth transistor Yg is turned on when ground potential is supplied to the panel capacitor Cp.

The diodes D1, D2, D3, and D4 control the flow of current.

In such a conventional energy recovery circuit, in order to turn on the transistors Yr, Yf, Ys, and Yg, the gate terminals and the source terminals of each of the transistors Yr, Yf, Ys, and Yg, is applied with 15V (in case of a FET). To turn on the transistors, a bootstrap technique using a capacitor has been used in the prior art.

FIG. 2 is a circuit diagram that implements a bootstrap technique for turning on the transistors. FIG. 2 shows only the bootstrap technique for turning on the third transistor Ys.

Referring to FIG. 2, the gate electrode of the third transistor Ys is provided with a controller 20 for controlling the turning on and turning off of the third transistor Ys. The controller 20 is provided with a capacitor C located between a first node N1 and a second node N2, control transistors Ms1 and Ms2 formed in parallel with the capacitor C, and a diode D10 located between the second node N2 and a power source (15V).

Describing the bootstrap technique, the fourth transistor Yg is turned on so that the first node N1 is supplied with a ground power source GND. At this time, the capacitor C is charged with 15V corresponding to the voltage difference between the first node N1 and the second node N2. After this, the fourth transistor Yg is turned off and at the same time, the first control transistor Ms1 is turned on. As a result, the third transistor Ys is turned on by the voltage charged in the capacitor C.

When the third transistor Ys is turned on, the voltage of the first node N1 rises up to the sustain voltage Vs. As a result, the voltage of the second node N2 rises to the voltage, which is higher than the sustain voltage Vs by 15V, by means of the capacitor C, making it possible to keep the third transistor Ys in the turn-on state.

However, such a conventional bootstrap technique requires complicated circuits and manufacturing costs are higher because each of the transistors is further provided with the controller 20. Also, it is difficult to assure stability because the circuits are complicated due to the circuits of the controller 20.

Furthermore, as shown in FIG. 2, when the voltage of the first node N1 rises, the capacitor C is set to high capacity so that the voltage of the second node N2 can stably be maintained. Such a configuration increases manufacturing costs because a diode D10 with a high breakdown voltage must be used in order to prevent the diode D10 from breaking down or otherwise being damaged due to the voltage rise of the second node N2.

### SUMMARY OF THE INVENTION

Accordingly, a first aspect of the invention provides an improved electrode driver for a plasma display panel. The electrode driver comprises a plurality of driver transistors and a power source unit for supplying a gate turn-on voltage to the plurality of driver transistors. According to the invention, the power source unit includes a transformer having a transformer primary part and a transformer secondary part. The transformer primary part is connected to a transformer primary part voltage source and the transformer secondary part is adapted to generate the gate turn-on voltage.

The transformer secondary part may include a first circuit and a second circuit. The first circuit may have a first circuit first terminal, a first circuit second terminal and a turns ratio between the first circuit first terminal and the first circuit second terminal such that when the first circuit first terminal is supplied with a ground potential, the first circuit second terminal generates a voltage capable of turning on a transistor included in the sustain driver. The second circuit may have a second circuit first terminal, a second circuit second terminal and a turns ratio between the second circuit first terminal and the second circuit second terminal such that when the second circuit first terminal is supplied with a voltage of a node located between an energy recovery circuit and the sustain electrodes, the second circuit second terminal generates a voltage capable of turning on a transistor included in the sustain driver.

The first circuit may further include a first circuit diode coupled to the first circuit second terminal and a first circuit capacitor coupled between the first circuit diode and the first circuit second terminal. The second circuit may further include a second circuit diode coupled to the second circuit second terminal and a second circuit capacitor coupled between the second circuit diode and the second circuit second terminal.

The transformer primary part voltage source may be a data voltage or a sustain voltage, the data voltage being a voltage of a data pulse, the sustain voltage being a voltage of a sustain pulse.

The electrode driver may include a first driver for supplying rising ramp pulses, a second driver for supplying falling ramp pulses, a third driver for alternatingly supplying a first voltage and a second voltage lower than the first voltage, and an energy recovery circuit.

In addition to the first and second circuits, the transformer secondary part of the electrode driver may further include a third circuit and a fourth circuit. The third circuit may have a third circuit first terminal and a third circuit second terminal, the third circuit first terminal being supplied with ground power and the third circuit second terminal generating the second voltage. The fourth circuit may have a fourth circuit first terminal and a fourth circuit second terminal, the fourth circuit first terminal being supplied with the second voltage and the fourth circuit second terminal generating the first voltage.

The third circuit may further include a third circuit diode coupled to the third circuit second terminal and third circuit capacitor coupled between the third circuit diode and the third circuit second terminal. The fourth circuit may further include a fourth circuit diode coupled to the fourth circuit second terminal and fourth circuit capacitor coupled between the fourth circuit diode and the fourth circuit second terminal.

A second aspect of the invention provides a plasma display panel comprising a display panel, scan and sustain electrodes parallel to each other on the display panel, address electrodes on the display panel crossing the scan electrodes and the sustain electrodes, and an electrode driver according to the first aspect of the invention. The electrode driver is coupled to either the scan electrodes or the sustain electrodes or coupled to the scan electrodes and the sustain electrodes.

### BRIEF DESCRIPTION OF THE DRAWINGS

FIG. 1 is a circuit diagram of a general energy recovery circuit.

FIG. 2 is a circuit diagram that implements a bootstrap technique for turning on the transistors of FIG. 1.

FIG. 3 is a schematic diagram depicting a PDP according to an exemplary embodiment of the present invention.

FIG. 4 is a circuit diagram showing a scan driver and a sustain driver depicted in FIG. 3.

FIG. 5 and Fig. 6 are circuit diagrams showing a first power source unit depicted in FIG. 4.

FIG. 7 and FIG. 8 are circuit diagrams showing a second power source unit depicted in FIG. 4.

### DETAILED DESCRIPTION

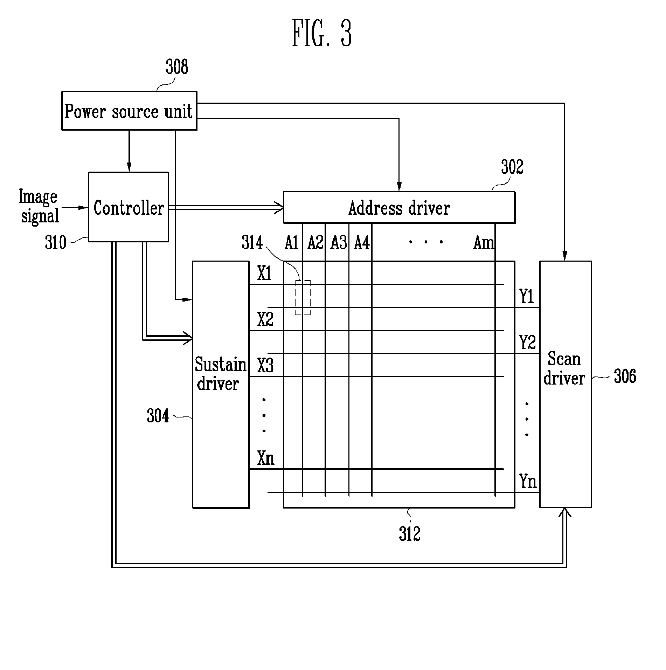

Referring to FIG. 3, a PDP includes a display panel 312, an address driver 302, a sustain driver 304, a scan driver 306, a power source unit 308, and a controller 310.

The display panel 312 includes scan electrodes Y1 to Yn and sustain electrodes X1 to Xn formed in parallel to each other, and address electrodes A1 to Am formed in a direction intersecting the scan electrodes Y1 to Yn and sustain electrodes X1 to Xn. In the display panel 312, the discharge cells 314 are located at the points where the scan electrodes Y1 to Yn and the sustain electrodes X1 to Xn intersect with the address electrodes A1 to Am. The structure of the electrodes Y, X, and A constituting the discharge cell is an exemplary embodiment of the present invention, but the present invention is not limited thereto.

The controller 310 is supplied with external image signals to generate control signals for controlling the address driver 302, the sustain driver 304, and the scan driver 306. The controller 310 generates the control signals such that one frame can be divided and driven into a plurality of subfields with a reset period, an address period, and a sustain period.

The address driver 302 corresponds to the control signals supplied from the controller 310 to select the discharge cells 314 to be turned on by supplying data pulses to the address electrodes A1 to Am during the address period of each subfield.

The sustain driver 304 corresponds to the control signals supplied from the controller 310 to supply the sustain pulses to the sustain electrodes X1 to Xn during the sustain period of each subfield.

The scan driver 306 corresponds to the control signals supplied from the controller 310 to control driving waveforms supplied to the scan electrodes Y1 to Yn. In other words, the scan driver 306 supplies ramp pulses to the scan electrodes Y1 to Yn during the reset period of each subfield and sequentially supplies scan pulses during the address period. Also, the scan driver 306 supplies sustain pulses that alternate with the pulses applied to the sustain electrodes X1 to Xn during the sustain period of each subfield.

The power source unit 308 supplies power required for driving the plasma display device to the controller 310 and the drivers 302, 304, 306.

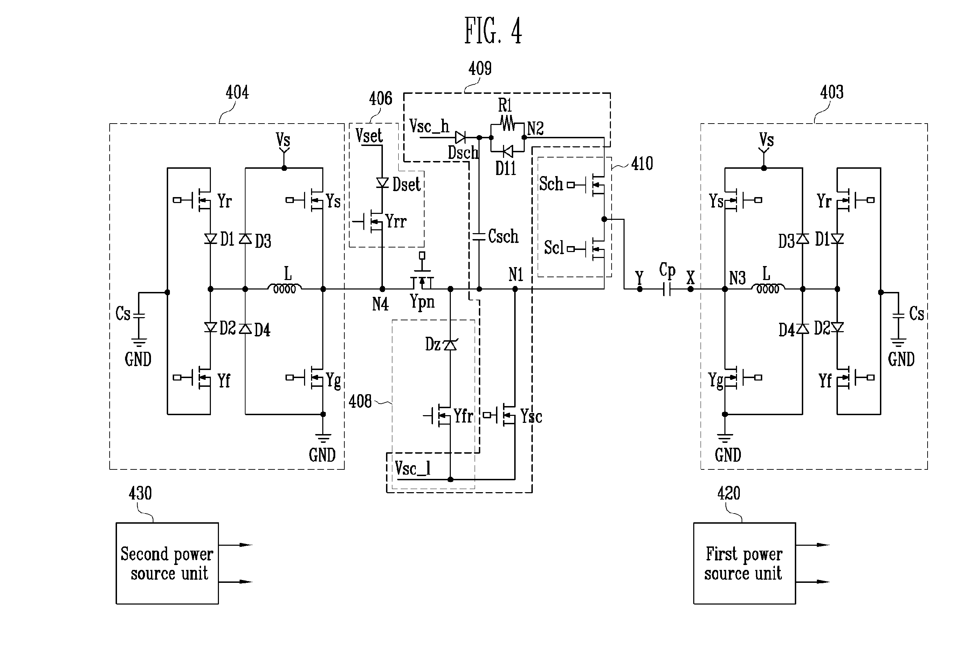

FIG. 4 is a circuit diagram showing the scan driver 306 and the sustain driver 304 depicted in FIG. 3. The panel capacitor Cp represents capacitive components formed by the scan electrodes Y and the sustain electrodes X. Further, although the sustain electrodes X are further connected to other components other than the energy recovery circuit 403, only the energy recovery circuit 403 is shown for convenience of explanation.

Referring to FIG. 4, the scan driver 306 includes a selection circuit 410 connected to each of the scan electrodes Y, a first driver 406 for supplying rising ramp pulses, a second driver 408 for supplying falling ramp pulses, a third driver 409 for supplying scan pulses, and an energy recovery circuit 404 for recovering and re-supplying the energy of the panel capacitor Cp. Numerous circuits are known in the art that may be used for supplying rising and falling ramp pulses, supplying scan pulses, and recovering and re-supplying the energy of the panel capacitor Cp. Accordingly, the circuit blocks presented in Fig. 4 are to be understood as preferred examples for each function. As will be apparent to the person skilled in the art, some or all of the circuit blocks 403, 404, 406, 408, 409 and 410 may be replaced by other circuits performing the same function. The following description is meant to illustrate the different voltages required for driving a PDP.

The selection circuit 410 is connected to each scan electrode Y. The selection circuit 410 controls turning on and turning off the transistors Sch and Scl and selectively supplies voltage supplied to a first node N1 (or, a first terminal) and a second node N2 (or a second terminal) to the scan electrodes Y.

The first driver 406 supplies the rising ramp pulses to the scan electrodes Y via the selection circuit 410 during the reset period of each subfield. The first driver 406 includes a transistor Yrr and a diode Dset.

The transistor Yrr is turned on through controlling the channel width so that the rising ramp pulses are supplied to the scan electrodes Y. The diode Dset is located between the transistor Yrr and a set up voltage source Vset to prevent the flow of inverse current.

The second driver 408 supplies the falling ramp pulses to the scan electrodes Y via the selection circuit 410 after supplying the rising ramp pulses. The second driver 408 includes a transistor Yfr and a zener diode Dz.

The third driver 409 supplies the scan pulses to the scan electrodes Y during the address period of each subfield. The third driver 409 includes diodes Dsch and D11, a transistor Ysc, a capacitor Csch, and a resistor R1.

The transistor Ysc is turned on during the address period. Then, the first node N1 is supplied with a second voltage Vsc_1 and the second node N2 is supplied with a first voltage Vsc_h. At this time, the transistors Sch and Scl included in the selection circuit 410 are selectively turned on so that any one of the first voltage Vsc_h and the second voltage Vsc_1 is supplied to the scan electrodes Y. Herein, the diode D11 and the resistor R1 are placed in a path where current flows, preventing peak current from being flowed.

The energy recovery circuit 404 supplies the sustain pulses during the address period of each subfield. In order to reduce power consumption when the sustain pulses are supplied, the energy recovery circuit 404 recovers the energy charged in the panel capacitor Cp and supplies the sustain pulses by using the recovered energy. Such an energy recovery circuit 404 includes transistors Yr, Yf, Ys, and Yg; diodes D1, D2, D3, and D4; and an inductor L.

The source capacitor Cs charges voltage by recovering the energy from the panel capacitor Cp during the sustain period and re-supplies the charged voltage to the panel capacitor Cp. The source capacitor Cs has capacity capable of charging voltage, which corresponds to a half of the sustain voltage Vs.

The inductor L is located between the source capacitor Cs and the panel capacitor Cp. Such an inductor L and the panel capacitor forms a resonant circuit. Accordingly, the voltage supplied from the source capacitor Cs to the panel capacitor Cp rises approximately up to the sustain voltage Vs.

The first transistor Yr is located between the inductor and the source capacitor Cs. The first transistor Yr is turned on when the voltage is supplied from the source capacitor Cs to the panel capacitor Cp.

The second transistor Yf is located between the inductor L and the source capacitor Cs. The second transistor Yf is turned on when the energy is recovered from the panel capacitor Cp to the source capacitor Cs.

The third capacitor Ys is located between the sustain voltage source Vs and the panel capacitor Cp. The third capacitor Ys is turned on after the voltage is primarily supplied from the source capacitor Cs to the panel capacitor Cp. As a result, the sustain voltage Vs is supplied to the panel capacitor Cp, making it possible to stably generate the sustain discharge.

The fourth transistor Yg is located between the ground power source GND and the panel capacitor Cp. The fourth transistor Yg is turned on when ground potential is supplied to the panel capacitor Cp.

The diodes D1, D2, D3, and D4 control the flow of current.

The control transistor Ypn located between the first node N1 and the energy recovery circuit 404 is turned off when negative polarity voltage is supplied to the first node N1 in order to prevent unnecessary current from being flowed into the energy recovery circuit 404, thereby stably maintaining the potential of the first node N1.

The sustain driver 304 includes the energy recovery circuit 403. The energy recovery circuit 403 included in the sustain driver 304 and the energy recovery circuit 404 included in the scan driver 306 alternately generate the sustain pulses and supply the sustain pulses to the sustain electrodes X and the scan electrodes Y. Because the energy recovery circuit 403 included in the sustain driver 304 is identical to the energy recovery circuit 404 included in the scan driver 306, a detailed description of the energy recovery circuit 403 will be omitted.

The first power source unit 420 is included in the sustain driver 304 and supplies the turn-on voltage to the transistors formed in the sustain driver 304. The first power source unit 420 stably supplies the turn-on voltage to the transistors by using the transformer so that the circuits are simplified over the

### prior art.

The second power source unit 430 is included in the scan driver 306 and supplies the turn-on voltage to the transistors formed in the scan driver 306. The second power source unit 430 stably supplies the turn-on voltage to the transistors by using the transformer so that the circuits are simplified over the

### prior art.

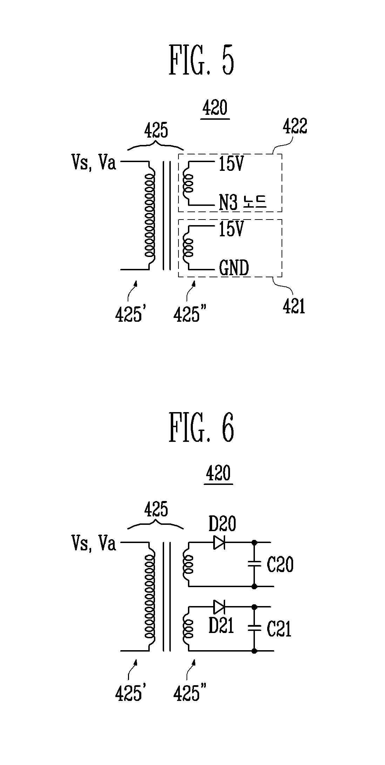

FIG. 5 is a circuit diagram showing the first power source unit 420 depicted in FIG. 4. The first power source unit 420 includes a transformer 425. The primary part of the transformer 425' is supplied with a voltage (e.g., a predetermined alternating voltage). For example, the primary part of the transformer 425' can be supplied with an alternating voltage having a peak-to-peak voltage corresponding to the sustain voltage Vs or to the data voltage Va. In actuality, the primary part of the transformer 425' can be provided with a variety of power sources used in the PDP.

The secondary part of the transformer 425" generates voltage for turning on the transistors included in the sustain driver 304. In order to turn on the transistors included in the sustain driver 304, a voltage higher than the voltage of the ground power source GND by 15V and a voltage higher than the voltage of the third node N3 by 15V are needed. To this end, the secondary part of the transformer 425" includes a first circuit 421 for generating a voltage higher than the voltage of the ground power source GND by 15V and a second circuit 422 for generating a voltage higher than the voltage of the third node N3 by 15V.

The first side terminal of the first circuit 421 is connected to the ground power source GND. The turns ratio of the first circuit 421 is set to generate a higher voltage by 15V in the second side terminal of the first circuit 421, as compared to the first side terminal of the first circuit 421. As a result, a voltage higher than the voltage of the ground power source GND by 15V is generated in the second side terminal of the first circuit 421.

The first side terminal of the second circuit 422 is connected to the third node N3, which is connected to the sustain electrode X. The turns ratio of the second circuit 422 is set to generate a higher voltage by 15V in the second side terminal of the second circuit 422, as compared to the first side terminal of the second circuit 422. As a result, a voltage higher than the voltage of the third node N3 by 15V is generated in the second side terminal of the second circuit 422.

As described above, exemplary embodiments of the present invention use a transformer for turning on the transistors included in the sustain driver 304. In other words, the exemplary embodiments of the present invention can control the turning on and turning off all transistors included in the sustain driver 304 by using a transformer, making it possible to reduce manufacturing costs. Also, an exemplary embodiment of the present invention has an advantage that the first side terminal of the second circuit 422 is connected to the third node N3, making it possible to stably generate a voltage higher than the voltage of the third node N3 by 15V, irrespective of the change in the voltage of the third node N3.

Although generating a voltage higher by 15V has been described above for use with field effect transistors (FETs), exemplary embodiments of the present invention are not thus limited. In other words, as depicted in Fig. 5, the voltage generated in the second side terminals of the first circuit 421 and the second circuit 422 can be set to a variety of voltages capable of turning on the transistor.

As shown in FIG. 6, capacitors C20 and C21 can further be formed between the first side terminals and the second side terminals of the first circuit 421 and the second circuit 422, respectively. Such capacitors C20 and C21 stably maintain the voltage between the first side terminal and the second side terminal. Also, diodes D20 and D21 can further be formed in the second side terminals of the first circuit 421 and the second circuit 422, respectively. Such diodes D20 and D21 prevent the flow of inverse current. Other forms of well-known rectifiers may be used instead of the circuits formed by diode D20 and capacitor C20 and diode D21 and capacitor C21, respectively, for generating a DC output voltage such as a bridge rectifier including four diodes. It is also possible to use a centre-tapped secondary coil of the transformer and a full-wave rectifier incorporating only two diodes.

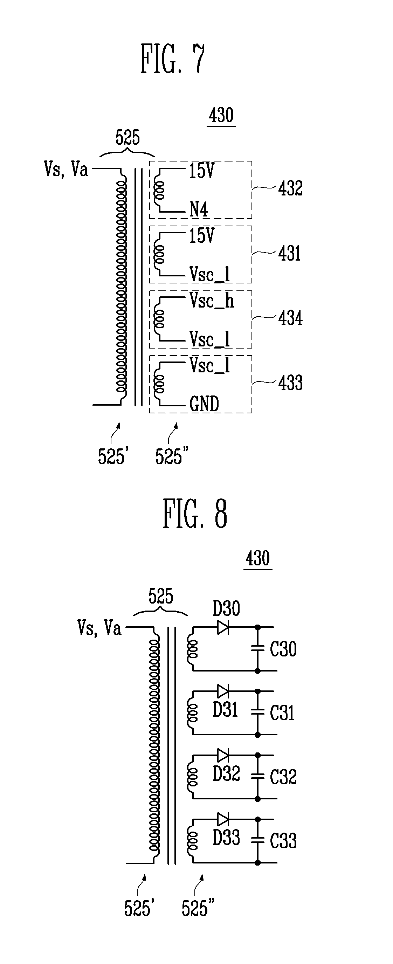

FIG. 7 is a circuit diagram showing the second power source unit 430 depicted in FIG. 4. The second power source unit 430 includes a transformer 525. The primary part of the transformer 525' is supplied with a voltage (e.g., a predetermined voltage). For example, the primary part of the transformer 525' can be supplied with the sustain voltage Vs or the data voltage Va. In actuality, the primary part of the transformer 525' can be provided with a variety of power sources used in the PDP.

The secondary part of the transformer 525" generates voltage for turning on the transistors included in the scan driver 306 and voltage used in the scan driver 306. In order to turn on the transistors included in the scan driver 306, a voltage higher than the voltage of the second voltage Vsc_1 by 15V and a voltage higher than the voltage of the fourth node N4 by 15V are needed. To this end, the secondary part of the transformer 525" includes a first circuit 431 for generating a voltage higher than the second voltage Vsc_1 by 15V and a second circuit 432 for generating a voltage higher than the voltage of the fourth node N4 by 15V.

The first side terminal of the first circuit 431 is supplied with the second voltage Vsc_1. The turns ratio of the first circuit 431 is set to generate a higher voltage by 15V in the second side terminal of the first circuit 431, as compared to the first side terminal of the first circuit 431. As a result, a voltage higher than the second voltage Vsc_1 by 15V is generated in the second side terminal of the first circuit 431.

The first side terminal of the second circuit 432 is connected to the fourth node N4. The fourth node N4 is located between the control transistor Ypn and the energy recovery circuit 404. The turns ratio of the second circuit 432 is set to generate a higher voltage by 15V in the second side terminal of the second circuit 432, as compared to the first side terminal of the second circuit 432. As a result, a voltage higher than the voltage of the fourth node N4 by 15V is generated in the second side terminal of the second circuit 432.

In other words, an exemplary embodiment of the present invention uses the transformer 525 for turning on the transistors included in the scan driver 306. The turning on of the transistors is controlled by using the transformer 525, making it possible to reduce manufacturing costs. Also, the first side terminal of the second circuit 432 is connected to the fourth node N4, making it possible to stably generate a voltage higher than the voltage of the fourth node N4 by 15V, irrespective of the change in the voltage of the fourth node N4.

Although generating a voltage higher by 15V has been described above for use with field effect transistors (FETs), exemplary embodiments of the present invention are not thus limited. In order words, as depicted in Fig. 7, the voltage generated in the second side terminals of the first circuit 431 and the second circuit 432 can be set to a variety of voltages capable of turning on the transistor.

The secondary part of the transformer further includes the third circuit 433 and the fourth circuit 434 for generating the second voltage Vsc_1 and the first voltage Vsc_h.

The first side terminal of the third circuit 433 is connected to the ground power source GND. The turns ratio of the third circuit 433 is determined to generate the second voltage Vsc_1. The second voltage Vsc_1 is previously set to the voltage when the scan pulses are supplied, in consideration of the size of the PDP, etc.

The first side terminal of the fourth circuit 434 is supplied with the second voltage Vsc_1. The turns ratio of the fourth circuit 434 is set to generate the first voltage Vsc_h higher than the second voltage Vsc_1 in the second side terminal of the fourth circuit 434. The first voltage Vsc_h is set to the voltage value supplied to the scan lines that are not supplied with the scan pulses during the address period, in consideration of the size of the PDP, etc.

As shown in FIG. 8, capacitors C30, C31, C32, and C33 can further be formed between the first side terminals and the second side terminals of the first circuit 431, the second circuit 432, the third circuit 433, and the fourth circuit 434, respectively. Such capacitors C30, C31, C32, and C33 stably maintain the voltage between the first side terminals and the second side terminals. Also, the second side terminals of the first circuit 431, the second circuit 432, the third circuit 433, and the fourth circuit 434, respectively, can further be provided with diodes D30, D31, D32, and D33. Such diodes D30, D31, D32, and D33 prevent the flow of inverse current. As described above for Fig. 6, other forms of rectifiers may be used in conjunction with the transformer depicted in Figs. 7 and 8.

With the PDP according to an exemplary embodiments of the present invention, a voltage is generated so as to turn on the transistors included in the sustain driver and the scan driver by using a transformer. Accordingly, exemplary embodiments of the present invention have less complicated circuits and manufacturing costs are reduced as compared to circuits utilizing the bootstrap technique. Also, if power is generated by using the transformer, the turn-on voltage can stably be generated.

## Claims

1. An electrode driver for a plasma display panel, the electrode driver comprising a plurality of driver transistors; and
a power source unit for supplying a gate turn-on voltage to the plurality of driver transistors,
**characterised in that** the power source unit includes a transformer having a transformer primary part and a transformer secondary part, the transformer primary part being connected to a transformer primary part voltage source, the transformer secondary part being adapted to generate the gate turn-on voltage.

2. The electrode driver as claimed in claim 1, wherein the transformer secondary part includes:
a first circuit having a first circuit first terminal and a first circuit second terminal, the first circuit having a turns ratio between the first circuit first terminal and the first circuit second terminal such that when the first circuit first terminal is supplied with a ground potential, the first circuit second terminal generates a voltage capable of turning on a transistor included in the sustain driver; and
a second circuit having a second circuit first terminal and a second circuit second terminal, the second circuit having a turns ratio between the second circuit first terminal and the second circuit second terminal such that when the second circuit first terminal is supplied with a voltage of a node located between an energy recovery circuit and the sustain electrodes, the second circuit second terminal generates a voltage capable of turning on a transistor included in the sustain driver.

3. The electrode driver as claimed in claim 2, wherein
the first circuit further includes a first circuit diode coupled to the first circuit second terminal and a first circuit capacitor coupled between the first circuit diode and the first circuit second terminal, and
wherein the second circuit further includes a second circuit diode coupled to the second circuit second terminal and a second circuit capacitor coupled between the second circuit diode and the second circuit second terminal.

4. The electrode driver as claimed in one of the preceding claims, wherein the transformer primary part voltage source is a data voltage or a sustain voltage, the data voltage being a voltage of a data pulse, the sustain voltage being a voltage of a sustain pulse.

5. The electrode driver as claimed in one of the preceding claims further including:
a first driver for supplying rising ramp pulses;
a second driver for supplying falling ramp pulses;
a third driver for alternatingly supplying a first voltage and a second voltage lower than the first voltage; and
an energy recovery circuit.

6. The electrode driver as claimed in one of the claims 2 or 3 or as claimed in one of the claims 2 or 3 and one of the claims 4 or 5, wherein the transformer secondary part includes:
a third circuit having a third circuit first terminal and a third circuit second terminal, the third circuit first terminal being supplied with ground power and the third circuit second terminal generating the second voltage; and
a fourth circuit having a fourth circuit first terminal and a fourth circuit second terminal, the fourth circuit first terminal being supplied with the second voltage and the fourth circuit second terminal generating the first voltage.

7. The electrode driver as claimed in claim 6, wherein
the third circuit further includes a third circuit diode coupled to the third circuit second terminal and third circuit capacitor coupled between the third circuit diode and the third circuit second terminal, and
the fourth circuit further includes a fourth circuit diode coupled to the fourth circuit second terminal and fourth circuit capacitor coupled between the fourth circuit diode and the fourth circuit second terminal.

8. A plasma display panel comprising:
a display panel;
scan electrodes and sustain electrodes parallel to each other on the display panel;
address electrodes on the display panel crossing the scan electrodes and the sustain electrodes; and
an electrode driver according to one of the preceding claims, the electrode driver being coupled to either the scan electrodes or the sustain electrodes or coupled to the scan electrodes and the sustain electrodes.
